# EUROPEAN PATENT APPLICATION

(11) **EP 4 681 858 A1**
(43) Date of publication of application: **21.01.2026**
(21) Application number: 25174701.0
(22) Date of filing: 07.05.2025
(51) Int. Cl.: B23K 9/32, B25J 11/00, B25J 9/16

(54) **WELDING ROBOT SYSTEM**

(30) Priority: 17.07.2024 JP 2024113933
(71) Applicant: DAIHEN Corporation, Yodogawa-ku Osaka-shi Osaka 532-8512 (JP)
(72) Inventor: AOKI, Takumi, Osaka, 532-8512 (JP)
(74) Representative: Manitz Finsterwald Patent- und Rechtsanwaltspartnerschaft mbB

(57) **Abstract**

A welding robot system includes a welding torch unit (12), a switch unit (13d) that puts a robot into a state where it can operate in response to an external force, a button unit (13a-c) that generates an arc, an operation mode setting unit (211) that sets an operation mode, and a welding control unit (213). The switch unit and the button unit are provided on the torch mount (13). When the operation mode is set to a direct operation mode in which an operator applies an external force directly to the robot with his or her hands and moves and operates the robot in response to the external force and welding is possible, the welding control unit generates an arc when both the switch unit and the button unit are continuously pressed, and causes the robot to operate differently depending on whether the switch unit or the button unit is pressed first.

## Description

### Background

### Field

The present invention relates to a welding robot system.

### Description of Related Art

Patent Publication JP-A-2015-199174 below discloses a technology called direct teaching, in which a operator manually applies an external force to a manipulator in a collaborative robot designed to work with humans, and the manipulator is operated by detecting the external force, thereby teaching the robot through a lead-through operation (direct operation). This direct teaching makes it easier to teach an operation than using a teaching pendant. Patent Publication JP-A-2015-199174 describes direct teaching by operating a handle attached to the wrist of the robot via an adapter. In addition, such a handle can be equipped with a switch to turn on/off the direct operation, record the position for teaching, and perform a preset operation.

### Summary

In the case of an arc welding robot, it is possible to perform arc welding while directly operating the robot by setting a mode or the like. When performing arc welding while directly operating the robot, one place may be welded without moving the robot, such as spot welding, or the actual welding may be performed while moving the robot. Therefore, for example, when performing spot welding, if the robot moves, there is a possibility that an unnecessary place may be welded, which can lead to a deterioration in work efficiency.

Therefore, an object of the present invention is to provide a welding robot system that can improve work efficiency when performing arc welding while directly operating the robot.

A welding robot system according to one aspect of the present invention includes a welding torch unit attached to a tip of a robot arm of a collaborative robot; a switch unit that enables the collaborative robot to operate in response to an external force while being pressed; a button unit that generates an arc from the welding torch unit while being pressed; an operation mode setting unit that sets an operation mode for operating the collaborative robot; and a welding control unit that controls welding, wherein the switch unit and the button unit are provided on either the robot arm or a member that is attached to the robot arm and is attached to a position different from the welding torch unit, when the operation mode is set to a direct operation mode in which an operator applies an external force directly to the collaborative robot with his or her hands and moves and operates the collaborative robot in response to the external force, and when welding is possible, the welding control unit generates an arc when both the switch unit and the button unit are continuously pressed, while causing the collaborative robot to operate differently depending on which of the switch unit and the button unit is pressed first.

According to this aspect, when the operation mode is set to the direct operation mode and welding is possible, an arc is generated when both the switch unit that makes the robot operable in response to an external force and the button unit that generates an arc are pressed, and the operation of the robot can be made different depending on whether the switch unit or the button unit is pressed first.

Therefore, when performing arc welding in the direct operation mode, the operator can perform arc welding after recognizing how the robot will operate.

In the above aspect, the welding control unit may generate an arc while keeping the collaborative robot fixed when the button unit is pressed first and then the switch unit is pressed, while generating an arc while the collaborative robot is movable in response to an external force when the switch unit is pressed first and then the button unit is pressed.

According to this aspect, when the button unit is pressed first, an arc can be generated while keeping the robot fixed, while when the switch unit is pressed first, an arc can be generated while the robot is movable in response to an external force.

In the above aspect, a welding mode switching unit may be further provided that switches a welding mode indicating that the welding can be performed between an on state and an off state, and the welding mode switching unit may switch the welding mode to an on state when the button unit is long-pressed when the operation mode is set to the direct operation mode and the switch unit is released.

According to this aspect, the conditions for switching the welding mode to the on state can be limited to specific conditions, so that the operator can be made aware that the welding mode has been switched to the on state.

In the above aspect, a notification unit may be further provided that notifies that the welding can be performed when the welding mode is switched to the on state.

According to this aspect, the operator can visually or audibly recognize that the welding mode has been switched to the on state through the notification.

In the above aspect, a torch mount may be further provided that is disposed between the tip of the robot arm and the welding torch unit, and the switch unit and the button unit are provided on the torch mount.

According to this aspect, when arc welding is performed while directly operating the robot, the operator can be required to perform a double operation of continuing to press both the switch unit and the button provided on the torch mount, so that safety during arc welding can be improved.

According to the present invention, a welding robot system can be provided that can improve work efficiency when performing arc welding while directly operating the robot.

### Brief Description of Drawings

FIG. 1 is a diagram illustrating the configuration of a welding robot system according to an embodiment;
FIG. 2 is a diagram showing an enlarged view of a torch mount constituting the welding robot of FIG. 1;
FIG. 3 is a diagram showing an enlarged view of a torch mount constituting the welding robot of FIG. 1; and
FIG. 4 is a block diagram showing an example of functions included in a control unit.

### Detailed Description

A preferred embodiment of the present invention will be described with reference to the attached drawings. In each drawing, the same reference numerals are used to denote the same or similar configurations. In addition, since the drawings are schematic, the dimensions and ratios of each component differ from the actual ones.

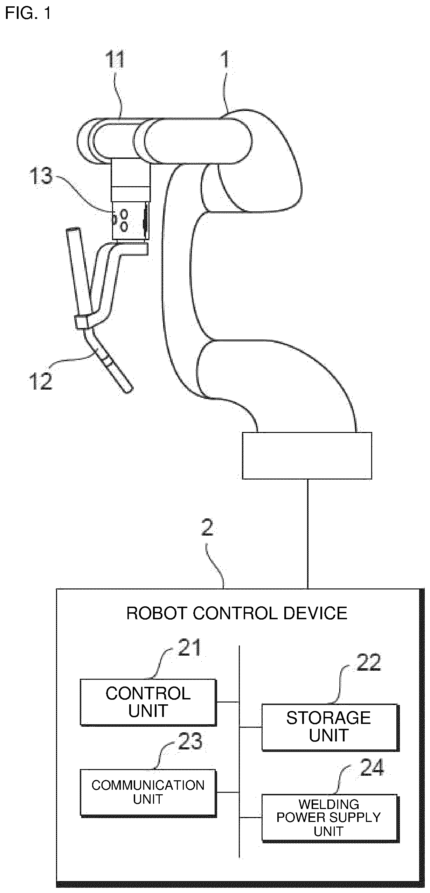

FIG. 1 is a diagram illustrating the configuration of a welding robot system according to an embodiment. The welding robot system includes, for example, a welding robot 1 and a robot control device 2. The welding robot 1 and the robot control device 2 can be connected via a network, including a wired or wireless network such as a communication cable. The welding robot system may also include a teaching pendant. The teaching pendant is an operation terminal that can be connected to the robot control device 2 and allows the operator to teach the operation of the welding robot 1.

The robot control device 2 is a control unit that controls the operation of the welding robot 1, and includes, for example, a control unit 21, a storage unit 22, a communication unit 23, and a welding power supply unit 24.

The control unit 21 is a processor that controls the welding robot 1 and the welding power supply unit 24 by executing a program such as a welding program stored in the storage unit 22. The communication unit 23 controls communication with each device connected via a network.

The welding power supply unit 24 supplies welding current, welding voltage, and the like to the welding robot 1 according to predetermined welding construction conditions, for example, in order to generate an arc between the tip of a welding wire and a workpiece. The welding construction conditions include, for example, data items such as welding conditions, welding start position, welding end position, welding distance, and welding torch posture. The welding conditions include data items such as, for example, welding current, welding voltage, welding speed, wire feed speed, and workpiece thickness. The welding power supply unit 24 may be provided separately from the robot control device 2.

The welding robot 1 is a manipulator (robot) that performs arc welding on a workpiece to be welded according to welding construction conditions set in the robot control device 2. The welding robot 1 has a multi-joint arm (robot arm) 11 that is mounted on a base member that is fixed to the floor of a factory, for example, a welding torch unit 12 that is one of the tools attached to the tip of the multi-joint arm 11, and a torch mount (member) 13 that is placed between the tip of the multi-joint arm 11 and the welding torch unit 12.

The welding robot 1 is also a collaborative robot that is designed to work with humans, and can operate in response to external forces. Therefore, an operator can directly apply an external force to the welding robot 1 with his or her hands, and move the welding robot 1 in response to the external force to directly operate the robot. In addition, by switching modes, it is possible to teach the robot's movements (direct teaching) during direct operation, and to perform arc welding during direct operation.

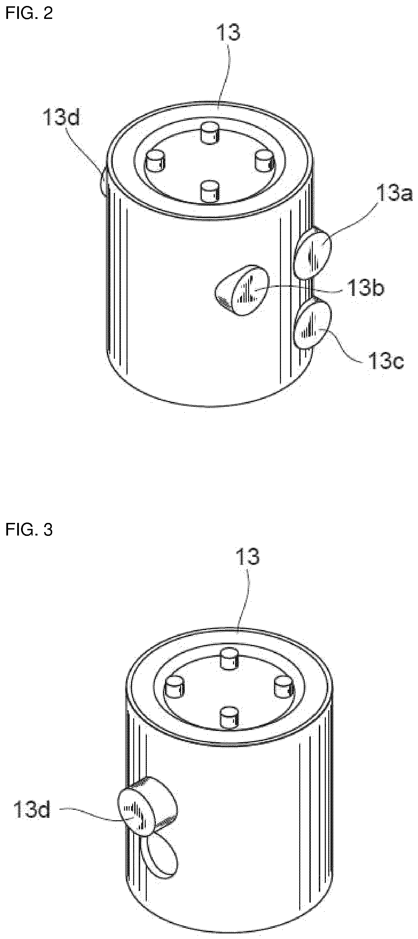

As shown in FIGS. 2 and 3, the torch mount 13 has, for example, three buttons 13a, 13b, and 13c and one switch unit 13d.

The switch unit 13d is a so-called enable switch. When the switch unit 13d is pressed and kept in the on state, a servo power supply is turned on, and the welding robot 1 is in a state where it can operate in response to an external force. On the other hand, when the switch unit 13d is released and put into the off state, the servo power supply is turned off, and the operation of the welding robot 1 is stopped. After the operation is stopped, the welding robot 1 is in a state where it cannot operate in response to an external force.

The operator can assign desired functions to the three buttons 13a, 13b, and 13c. For example, the following functions (1) to (4) can be assigned to the three buttons 13a, 13b, and 13c. These functions are explained in order below.
(1) Functions Related to Welding Operation:
   These functions include, for example, (1-1) an arc-on function, (1-2) an inching function, and (1-3) a retract function. Each function will be described below in order.
(1-1) The arc-on function is a function for performing arc welding for spot welding or the like. In this embodiment, as an example, the arc-on function is assigned to the button 13c (button unit) of the three buttons 13a, 13b, and 13c, but is not limited to this. The arc-on function may be assigned to any desired button (button unit) of the three buttons 13a, 13b, and 13c.

The arc-on function is assigned to the button 13c when the switch unit 13d is released and the button 13c is long-pressed. This arc-on function is a function that can be assigned to the button 13c and executed when the operation mode described later is set to the direct operation mode.

When the arc-on function is assigned to the button 13c, an arc will be generated by pressing and holding both the button 13c and the switch unit 13d. The robot moves differently depending on whether the button 13c or the switch unit 13d is pressed first. The following explains each case in order.
(a) When the Button 13c is Pressed First:
   When the button 13c is pressed first and the switch unit 13d is pressed afterwards, an arc is generated while the robot remains stationary. This is a useful function when performing spot welding before performing main welding.
(b) When the Switch Unit 13d is Pressed First:
   When the switch unit 13d is pressed first and the button 13c is pressed afterwards, an arc is generated while the robot is in a state where it can move in response to an external force. This is useful for spot welding, but is also a useful function when performing simple welding.

The time for which the button is pressed to distinguish between a long press and a short press, which will be described later, may be changed by the operator as appropriate.

(1-2) The inching function is a function that executes inching to feed the welding wire slightly. When this function is assigned to a button, inching is executed while the assigned button is pressed.

(1-3) The retract function is a function that executes retraction by reversing the feeding direction of the welding wire and returning it. When this function is assigned to a button, retraction is executed while the assigned button is pressed.

(2) Functions Related to Robot Movement:
This function includes, for example, (2-1) a function to switch the robot's movement, (2-2) a function to switch the robot's speed, and (2-3) a function to operate the robot. Each function will be explained below in order.

(2-1) The function to switch the robot's movement is a function to switch the robot's movement when the robot is directly operated manually. In this embodiment, a case will be explained where this function is fixedly assigned to the button 13b. Each time the button 13b to which this function is assigned is short-pressed, the movement mode is switched in sequence to, for example, translation mode, rotation mode, or free mode.

The translation mode is a mode in which only the position of the welding torch is moved without changing the posture of the welding torch. The rotation mode is a mode in which only the posture of the welding torch is changed without changing the position of the tip of the welding torch. The free mode is a mode in which all axes of the robot can be moved freely.

(2-2) The function to switch the robot's speed is a function of switching the robot speed when the robot is directly operated manually. When this function is assigned to a button, each time the assigned button is short-pressed, the speed is switched between two set speeds, for example, "speed 1" and "speed 2". The number of speeds to be switched is not limited to two, and may be three or more.

(2-3) The function of operating the robot is a function of operating the robot a predetermined distance (e.g., 1 mm, 2 mm, or the like) in a predetermined direction (e.g., the tool direction in the tool coordinate system, or the like).

(3) Function of Recording Teaching Position:
This function includes, for example, (3-1) function A of recording teaching position, (3-2) function B of recording teaching position, and (3-3) function C of recording teaching position. Function A of recording teaching position, function B of recording teaching position, and function C of recording teaching position are functions that record the current position of the robot as the teaching position when the robot is directly operated manually. The difference between each function is the command that is automatically inserted after recording the teaching position. Each function will be explained in order below.

(3-1) When function A for recording the teaching position is assigned to a button and the button is short-pressed, the position of the robot at that time is recorded as the teaching position. With this function, no command is inserted after the position is recorded.

(3-2) When function B for recording the teaching position is assigned to a button and the button is short-pressed, the position of the robot at that time is recorded as the teaching position, and then a command to start welding is inserted. On the other hand, when the assigned button is long-pressed, the position of the robot at that time is recorded as the teaching position, and then a command to end welding is inserted.

(3-3) When function C for recording the teaching position is assigned to a button and the button is short-pressed, the position of the robot at that time is recorded as the teaching position, and then a welding start command and a weaving start command are inserted in sequence. On the other hand, when the assigned button is long-pressed, the position of the robot at that time is recorded as the teaching position, and then a weaving end command and a welding end command are inserted in sequence.

(4) Function for Changing the Pattern of Functions Assigned to Each Button:
This function is a function that allows a plurality of patterns of functions to be assigned to the three buttons 13a, 13b, and 13c to be registered and the functions of each button to be changed collectively by selecting one of the patterns.

In this embodiment, this function is fixedly assigned to the button 13b. When the button 13b to which this function is assigned is long-pressed, one of the patterns can be selected.

For example, as "Pattern 1," a pattern can be registered in which "Function A of recording a teaching position" is assigned to the button 13a, "Function of switching the robot's movement mode" is assigned fixedly to the button 13b, and "Function B of recording a teaching position" is assigned to the button 13c. Furthermore, as "Pattern 2," a pattern can be registered in which "Retract function" is assigned to the button 13a, "Function of switching the robot's movement mode" is assigned fixedly to button 13b, and "Inching function" is assigned to the button 13c.

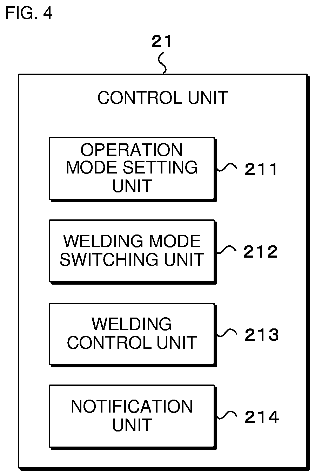

The functions of the control unit 21 will be described with reference to FIG. 4. The control unit 21 includes, for example, an operation mode setting unit 211, a welding mode switching unit 212, a welding control unit 213, and a notification unit 214. Each unit will be described below.

The operation mode setting unit 211 sets an operation mode for operating the robot. The operation modes include, for example, a direct operation mode and a non-direct operation mode. In the direct operation mode, an operator applies an external force directly to the robot with his/her hands, and moves the robot in response to the external force to directly operate the robot. In the non-direct operation mode, the robot is moved by means other than direct operation, such as by moving the robot by a program.

The welding mode switching unit 212 switches the welding mode to either an on state or an off state. The welding mode is flag information indicating whether welding can be performed. When the welding mode is on, welding can be performed, and when the welding mode is off, welding cannot be performed.

When the operation mode is set to the direct operation mode, the welding mode switching unit 212 switches the welding mode to the on state when the button unit 13c is long-pressed while the switch unit 13d is released.

The welding control unit 213 controls the operation of the robot related to arc welding. An example of how the welding control unit 213 controls the operation of the robot is described below.

When the operation mode is set to the direct operation mode and the welding mode is on, if the button 13c is pressed first and then the switch unit 13d is pressed, the welding control unit 213 generates an arc while keeping the robot fixed.

On the other hand, when the operation mode is set to the direct operation mode and the welding mode is on, if the switch unit 13d is pressed first and then the button 13c is pressed, the welding control unit 213 generates an arc while the robot is movable in response to an external force.

When the welding mode is switched to the on state, the notification unit 214 notifies that welding can be performed. The notification can be realized, for example, by outputting light, sound, text, or the like. Specifically, the button 13c may be made to flash rapidly, a beep may be output from the welding robot 1 or the teaching pendant, or a message to that effect may be displayed on the teaching pendant.

As described above, according to the welding robot system of the embodiment, when the operation mode is set to the direct operation mode and the welding mode is on, an arc is generated when both the switch unit 13d that makes the robot operable in response to an external force and the button unit 13c that generates an arc are pressed, and the operation of the robot can be made different depending on whether the switch unit or the button unit is pressed first.

Specifically, when the button 13c is pressed first and then the switch unit 13d is pressed, an arc is generated while the robot remains fixed, whereas when the switch unit 13d is pressed first and then the button 13c is pressed, an arc is generated while the robot is movable in response to an external force.

Therefore, when performing arc welding in the direct operation mode, it is possible for the operator to recognize whether to perform welding while the robot is fixed or to perform welding while the robot is movable before performing arc welding.

Therefore, according to the welding robot system according to the embodiment, it is possible to improve the work efficiency when performing arc welding while directly operating the robot.

Note that the present invention is not limited to the above-described embodiment, and can be implemented in various other forms without departing from the scope of the present invention. For this reason, the above-described embodiment is merely illustrative in all respects and should not be interpreted in a restrictive manner.

## Claims

1. A welding robot system comprising:
a welding torch unit (12) attached to a tip of a robot arm (11) of a collaborative robot (1);
a switch unit (13d) that enables the collaborative robot (1) to operate in response to an external force while being pressed;
a button unit (13a-c) that generates an arc from the welding torch unit (12) while being pressed;
an operation mode setting unit (211) that sets an operation mode for operating the collaborative robot; and
a welding control unit (213) that controls welding, wherein
the switch unit (13d) and the button unit (13a-c) are provided on either the robot arm (11) or a member (13) that is attached to the robot arm (11) and is attached to a position different from the welding torch unit (12),
when the operation mode is set to a direct operation mode in which an operator applies an external force directly to the collaborative robot (1) with his or her hands and moves and operates the collaborative robot (1) in response to the external force, and when welding is possible, the welding control unit (213) generates an arc when both the switch unit (13d) and the button unit (13a-c) are continuously pressed, while causing the collaborative robot (1) to operate differently depending on which of the switch unit (13d) and the button unit (13a-c) is pressed first.

2. The welding robot system according to claim 1, wherein
the welding control unit (213) generates an arc while keeping the collaborative robot (1) fixed when the button unit (13a-c) is pressed first and then the switch unit (13d) is pressed, while generating an arc while the collaborative robot (1) is movable in response to an external force when the switch unit (13d) is pressed first and then the button unit (13a-c) is pressed.

3. The welding robot system according to claim 1, further comprising:
a welding mode switching unit (212) that switches a welding mode indicating that the welding can be performed between an on state and an off state, wherein
the welding mode switching unit (212) switches the welding mode to an on state when the button unit (13a-c) is long-pressed in a state where the operation mode is set to the direct operation mode and the switch unit (13d) is released.

4. The welding robot system according to claim 3, further comprising:
a notification unit (214) that notifies that the welding can be performed when the welding mode is switched to an on state.

5. The welding robot system according to claim 1, further comprising:
a torch mount (13) that is disposed between the tip of the robot arm (11) and the welding torch unit (12), wherein
the switch unit (13d) and the button unit (13a-c) are provided on the torch mount (13).
